# EUROPÄISCHE PATENTSCHRIFT

(11) **EP 0 700 344 B1**
(45) Veröffentlichungstag und Bekanntmachung des Hinweises auf die Patenterteilung: **05.02.1997**
(21) Anmeldenummer: 94916231.7
(22) Anmeldetag: 13.05.1994
(51) Int. Cl.: B60T 8/50, B60T 8/36

(54) **HYDRAULISCHE BREMSANLAGE MIT SCHLUPFREGELUNG**
HYDRAULIC BRAKE SYSTEM WITH SLIP CONTROL
SYSTEME DE FREINAGE HYDRAULIQUE A DISPOSITIF ANTIPATINAGE

(30) Priorität: 09.06.1993 DE 4319227
(43) Veröffentlichungstag der Anmeldung: 13.03.1996
(73) Patentinhaber: ITT Automotive Europe GmbH, 60488 Frankfurt (DE)
(72) Erfinder: BURGDORF, Jochen, D-63075 Offenbach (DE); VOLZ, Peter, D-64291 Darmstadt (DE); DINKEL, Dieter, D-65817 Eppstein (DE)
(86) Internationale Anmeldenummer: EP9401541
(87) Internationale Veröffentlichungsnummer: WO9429150

(56) Entgegenhaltungen:
- EP-A- 0 347 274
- WO-A-90/12713
- DE-A- 2 643 860
- DE-A- 3 427 802
- FR-A- 2 139 140
- FR-A- 2 680 742
- GB-A- 2 175 058
- US-A- 4 957 330
- BOSCH TECHNISCHE BERICHTE Band 7 (1980) Heft 2 ISSN 0006-789 X Antiblockiersystem (ABS)

## Beschreibung

Die Erfindung betrifft eine hydraulische Bremsanlage mit Schlupfregelung nach dem Oberbegriff des Anspruchs 1.

Die diskontinuierliche Druckmittelsteuerung bei schlupfgeregelten Bremsanlagen mittels digital schaltbaren Einlaß- und Auslaßventilen führt infolge des impulsartigen Druckverlaufs zur unerwünschten Schallemission.

Deshalb wurden bereits verschiedene Maßnahmen zur Senkung des Geräuschpegels während der ABS-/ASR-Regelphase vorgeschlagen, wozu beispielhaft auf die internationale Patentanmeldung WO-A-9 012 713 verwiesen wird. Hierin wird vorgeschlagen, Druckpulsationsdämpfer innerhalb den Hauptdruckleitungen, und zwar in Nähe des Bremsdruckgebers, bzw. im Nebenschluß der elektromagnetischen Einlaß- und Auslaßventile anzuordnen. Die verwendeten Druckpulsationsdämpfer sind als schwingungsdämpfende, elastomere Energiespeicherelemente ausgeführt, die durch ihre definierte Volumenerweiterung, Durchströmungslänge und Drosseleigenschaften eine Übertragung der aus den Ventilschaitfrequenzen resultierenden Schallemission auf das massebehaftete und folglich schwingungsfähige Bremssystem verhindern sollen.

Ein relativ weiches Pedalgefühl und die Vergrößerung des Pedalweges sind die unerwünschten Folgen der durch die vorbeschriebenen Druckpulsationsdämpfer zusätzlich hervorgerufene Volumenaufnahme von Druckmittel während des Bremsvorganges.

In der FR-A-2680742 ist eine elektromagnetisch schaltbare Blende jeweils in die Hauptbremsleitung zwischen dem Einlaß- und Auslaßventil und der Radbremse angeordnet. Damit kann in Abhängigkeit eines von einer Steuer- und Regelelektronik kommenden Schaltsignal die Blende in ihre den Durchfluss zur Radbremse verkleinernden Schaltstellung gebracht werden. Bei einem verharren der Blende in vorbeschriebener Schaltposition sowohl in der Bremsdruckaufbau - als auch in der Bremsdruckabbauphase einer Blockierschutzregelung, so ist infolge der Drosselwirkung ein schneller Druckabbau in der Radbremse ausgeschlossen, womit mangels hinreichenden Wiederbeschleunigungsvermögen des Rades auf Oberflächen mit Niedrigreibwert dies zu einem unerwünschten Blockieren der Radbremse führen kann. Ein schaltungstechnisch vergleichbarer Aufbau geht gleichfalls aus der EP-A-0 347 274 hervor.

Aus der DE-A-3427802 geht eine hydraulische Bremsanlage hervor, die in eine an der Saugseite der Pumpe angeschlossenen Rücklaufleitung eine Festblende aufweist. Das vom Bremsdruckgeber über eine Hauptdruckleitung zu den Radbremsen gelangende Druckmittel durchströmt die Festblende ausschließlich in der Druckabbauphase eine Bremsdruckregelung, wenn das aus Einlaß- und Auslaßventil bestehende Kombiventil in die Auslaßventilstellung geschaltet ist, in der eine Druckmittelverbindung zwischen den Radbremsen und der zur Saugseite der Pumpe führenden Rücklaufleitung besteht.

Die US-A-4957330 zeigt eine hydraulische Bremsanlage mit Schlupfregelung mit einem Steuerkolben in einem Gehäuse, an dem sich zur Ausführung der schaltbaren Blendenfunktion sowohl ein Druckanschluß des Hauptzylinders als auch ein Druckanschluß der Radbremse befinden, so daß in Abhängigkeit von der Druckdifferenz an den beiden Stirnflächen des Steuerkolbens dieser die das Gehäuse des Steuerkolben durchdringende Hauptdruckleitung in ihrem Durchlaßquerschnitt verändert. Eine Blendenfunktion ist in jedem Falle nach Abschluß der Druckhaltephase einer blockiergeschützten Bremsung gewährleistet, da die Druckdifferenz am Steuerkolben hierbei ihr Maximum erreicht. Das Druckmodulationsventil der Radbremse ist separat zum schaltbaren Blendenventil in der Hauptdruckleitung angeordnet.

Daher ist es die Aufgabe der Erfindung, unter Beibehaltung eines möglichst unveränderten einfachen Grundaufbaus der bisher gebräuchlichen Bremsanlagen einen Lösungsweg aufzuzeigen, der den von den Ventilschaltstellungen abhängigen Geräuschpegel und dessen Fortpflanzung wirkungsvoll mindert.

Diese Aufgabe wird erfindungsgemäß durch die den Patentanspruch 1 kennzeichnenden Merkmale gelöst.

Die Erfindung basiert somit auf dem Gedanken, die von den Schaltfrequenzen der Ventile ausgelösten Druckimpulse unterschiedlicher Intensität abhängig von der Druckdifferenz zwischen der Radbremse und dem Bremsdruckgeber mittels eines schaltbaren Blenden- bzw. Drosselkörpers zu mindern, indem der Durchlaßquerschnitt zwischen Einlaßventil und Radbremse variiert werden kann.

Weitere Merkmale, Vorteile und Anwendungsmöglichkeiten der Erfindung gehen aus der nachfolgenden Beschreibung mehrerer

Ausführungsbeispiele hervor.

Es zeigen:
- Figur 1: einen hydraulischen Schaltplan für die erfindungsgemäße Bremsanlage,
- Figur 2: eine Teilansicht eines Einlaßventils für die erfindungsgemäße Bremsanlage im Querschnitt,
- Figur 3: eine weitere Teilansicht für eine alternative Ausführungsform des Einlaßventils,
- Figur 4: eine weitere Ventilkonstruktion im Querschnitt.

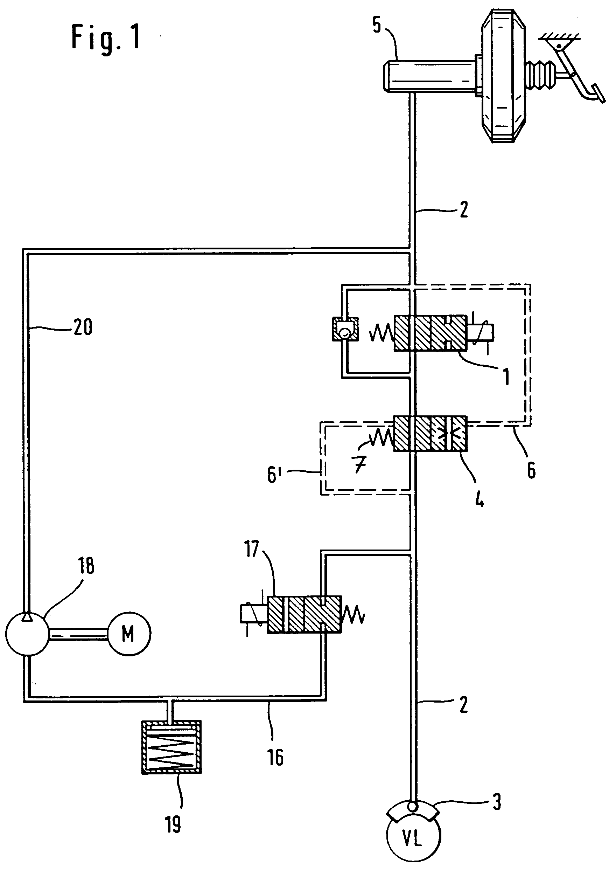

Die Figur 1 zeigt schematisch skizziert den hydraulischen Schaltplan für die erfindungsgemäße Bremsanlage. Der Bremsdruckgeber 5 steht über die Hauptdruckleitung 2 mit der Radbremse 3 in Verbindung. Ein in der Grundstellung elektromagnetisch auf Durchlaß geschaltetes Einlaßventil 1 sowie ein zum Einlaßventil 1 stromabwärts angeordnete und in der Grundstellung wirkungslos geschaltete Blende 4 sind Bestandteil der Hauptdruckleitung 2. Die schaltbare Blende 4 ist symbolisch als 2/2-Wegeventil dargestellt, an dem ein erster Steuerdruckanschluß 6 vom Druck des Bremsdruckgebers 5 und ein am 2/2-Wegeventil entgegengesetzt wirkender zweiter Steuerdruckanschluß 6' vom Druck in der Radbremse 3 beaufschlagt ist. Eine symbolisch am 2/2-Wegeventil dargestellte Druckfeder 7 sorgt für die Einhaltung eines zunächst ungedrosselten Druckmitteldurchlasses zur Radbremse 3. An der Radbremse 3 ist ferner eine Rücklaufleitung 16 angeschlossen, die über ein in der Grundstellung in Sperrstellung befindliches elektromagnetisches Auslaßventil 17 an der Saugseite einer Hilfsdruckpumpe 18 angeschlossen ist. Zur Zwischenspeicherung von überschüssigem Druckmittelvolumen weist überdies die Rücklaufleitung 16 einen Niederdruckspeicher 19 auf. Die Druckseite der Hilfsdruckpumpe 18 steht über eine Hilfsdruckleitung 20 mit dem Bremsdruckgeber 5 bzw. wiederum mit der Hauptdruckleitung 2 in Verbindung. Durch die erfindungsgemäße Ventilschaltung ist es möglich, eine Minderung der im Einlaßventil 1 ansonsten verursachten Ventilschaltgeräusche zu erzielen, sobald während des Schaltvorganges des Einlaßventils sowie abhängig von einem konstruktiv festgelegten Umschaltpunkt die Blende 4 in die Hauptdruckleitung 2 geschaltet wird. Es ist vorgesehen, anhand definierter Auslegungskriterien der Bremsanlage, beispielsweise mit einer zunehmenden Druckdifferenz von mehr als 15 bar die Blendenfunktion wirksam werden zu lassen.

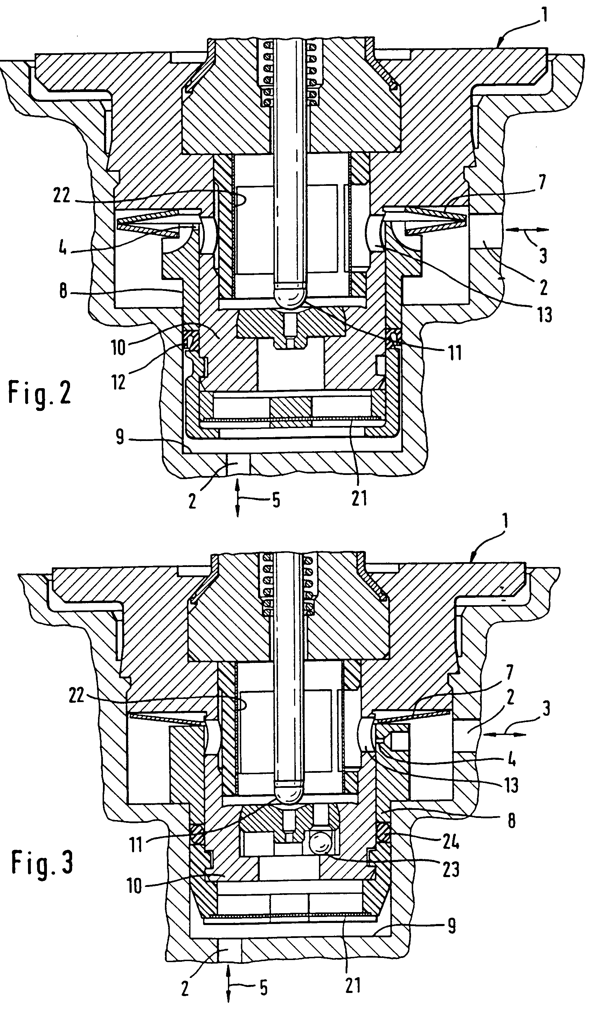

Die Figur 2 zeigt ein konstruktives Ausführungsbeispiel zur Vereinigung der Blendenfunktion im Einlaßventil 1. Das Einlaßventil 1 besteht aus einem Ventilträger 10, der das Ventilschließglied 11 und die Kanalführung der Hauptdruckleitung 2 beinhaltet. Der Ventilträger 10 ist vorzugsweise in Patronenbauweise in einem Ventilaufnahmekörper 9 integriert. Druckmittel der Hauptdruckleitung 2 gelangt vom symbolisch dargestellten Bremsdruckgeber 5 über einen Plattenfilter 21, das offengeschaltete Ventilschließglied 11, das im Ventilträger 10 eingesetzte Ringfilterelement 22 zu einer Querbohrung 13, die als Funktionsbestandteil der Hauptdruckleitung 2 in der gezeigten Darstellung in teilweiser Überdeckung mit dem Ringkolben 8 steht. Der Ringkolben 8 übernimmt infolge seiner an der Stirnseite angeordneten Einkerbung (Blende 4) die Blendenfunktion und variiert folglich differenzdruckabhängig den Hub des Ringkolbens 8 und damit den Durchlaßquerschnitt zwischen der Querbohrung 13 und der Ringkolbenstirnfläche. Der Ringkolben 8 ist auf dem Fortsatz des Ventilträgers 10 radial geführt und stützt sich unter Wirkung einer Druckfeder 7 an einer als Rückschlag-Manschette wirksamen Ringdichtung 12 zwischen der Stufenbohrung des Ventilaufnahmekörpers 9 und dem Fortsatz ab. Die Ringdichtung 12 übernimmt die Druckentlastungsfunktion des in Figur 1 parallel zum Einlaßventll angeordneten und in Richtung des Bremsdruckgebers 5 öffnenden Rückschlagventils auf besonders kompakt bauende Weise. Der Plattenfilter 21 ist mittels eines am Fortsatz verstemmten Haltetopfs befestigt, so daß der Haltetopf vorteilhaft zur direkten Einstellung des Ringkolbens 8 genutzt werden kann. Hierdurch läßt sich die Einbautoleranz für den Schließweg des Ringkolbens 8 klein gestalten. Die Druckfeder 7 ist bauraumoptimiert als Tellerfederpaar zwischen dem erweiterten Stirnflächenabschnitt des Ventilträgers 10 und der benachbarten Stirnfläche des Ringkolbens 8 eingespannt.

Abweichend von Figur 2 erfolgt in Figur 3 die Blendenfunktion mittels einer die Mantelfläche des Ringkolbens 8 durchdringenden Blendenbohrung, so daß bei zunehmendem hydraulischen Differenzdruck der Ringkolben 8 nach oben gegen die Druckfeder 7 verschoben wird, womit die Querbohrung 13 in Überdeckung gelangt und der Durchlaßquerschnitt auf das Maß der Blendenbohrung reduziert ist. Alternativ zu Figur 2 ist in Figur 3 der Plattenfilter 21 als Kunststoffteil am Umfang des Ventilträgers 10 eingeklipst. Darüber angeordnet befindet sich ein O-Ring 24, so daß die in Figur 2 beschriebene Druckentlastungsfunktion mittels eines separat im Ventilträger 10 angeordneten Kugel-Rückschlagventils 23 geschieht. Der O-Ring 24 nimmt somit ausschließlich die Abdichtung des Ringkolbens 8 wahr und wird gleichzeitig vom Ringfilter 21 gehalten.

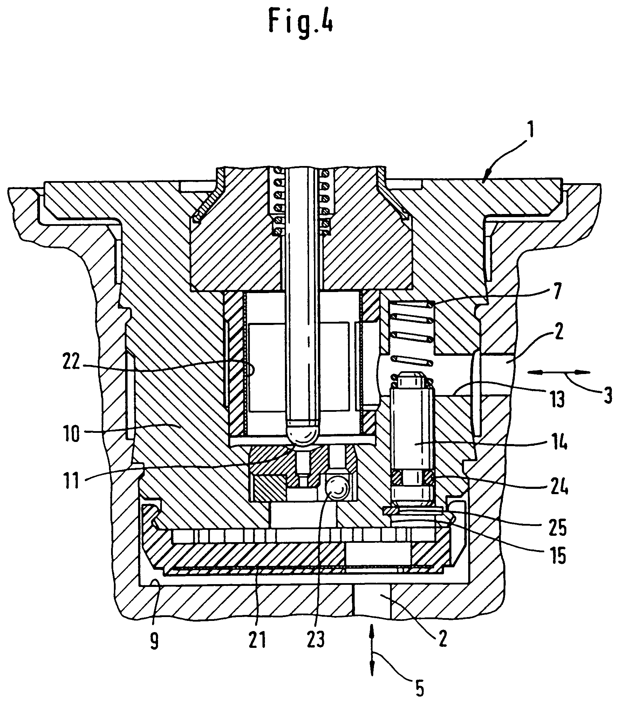

Die Figur 4 zeigt abweichend von den vorangegangenen Ausführungsbeispielen nach Figur 2 und 3 eine weitere alternative Konstruktionsform zur Verwirklichung der schaltbaren Blenden- bzw. Drosselfunktion anhand eines baulich parallel zum Ventilschließglied 11 angeordneten Steuerkolbens 14 auf, der mittels O-Ring 24 am Kolbenschaft gedichtet im Ventilträger 10 radial geführt ist und sich mit seiner Stirnfläche an einer im Ventilträger 10 eingeklipsten Anschlagscheibe 25 abstützt. Die entgegengesetzte Stirnfläche des Steuerkolbens 14 ist gleichfalls wie in den vorangegangenen Ausführungsbeispielen von einer Druckfeder 7 beaufschlagt. Diese Stirnfläche bildet entsprechend ihrer konstruktiven Ausformung einen Blendendurchlaßquerschnitt innerhalb der zur Hauptdruckleitung 2 gehörenden Querbohrung 13, so daß mit zunehmender Druckdifferenz zwischen Bremsdruckgeber 5 und Radbremse 3 der Steuerkolben 14 die Querbohrung 13 bis auf den Blendenquerschnitt versperrt. Die beschriebene Ausführungsform zeichnet sich durch eine kostengünstige Herstellung des Steuerkolbens 14 und der senkrecht zur Querbohrung 13 angeordneten Aufnahmebohrung 15 aus. Der Ventilträger 10 ist in der gezeigten Abbildung mittels einer Selbstverstemmung im Ventilaufnahmekörper 9 gehalten. Die Ventilbefestigung kann jedoch gleichfalls durch Varianten weiterer kraft- und/oder formschlüssiger Verbindungsmethoden erfolgen, ohne daß hierzu detailliert Stellung genommen wird.

Durch die vorbeschriebenen Ausführungsformen sind räumlich besonders kompakte Integrationsmöglichkeiten von schaltbaren Blendenvarianten im bestehenden Ventilträger 10 bzw. im Ventilaufnahmekörper 9 möglich, ohne aufwendige Veränderungen am Ventilaufbau vornehmen zu müssen.

### Bezugszeichenliste

- 1: Einlaßventil
- 2: Hauptdruckleitung
- 3: Radbremse
- 4: Blende
- 5: Bremsdruckgeber
- 6: Steuerdruckanschluß
- 6': Steuerdruckanschluß
- 7: Druckfeder
- 8: Ringkolben
- 9: Ventilaufnahmekörper
- 10: Ventilträger
- 11: Ventilschließglied
- 12: Ringdichtung
- 13: Querbohrung
- 14: Steuerkolben
- 15: Aufnabmebohrung
- 16: Rücklaufleitung
- 17: Auslaßventil
- 18: Hilfsdruckpumpe
- 19: Niederdruckspeicher
- 20: Hilfsdruckleitung
- 21: Plattenfilter
- 22: Ringfilter
- 23: Rückschlagventil
- 24: O-Ring
- 25: Anschlagscheibe

## Patentansprüche

1. Hydraulische Bremsanlage mit Schlupfregelung, mit einem Bremsdruckgeber, der über eine Hauptdruckleitung (2) mit wenigstens einer Radbremse (3) hydraulisch in Verbindung steht, mit einer an der Radbremse (3) angeschlossenen Rücklaufleitung (16), die mit einem Druckmittelsammler (19) in Verbindung steht, mit einer Hilfsdruckpumpe (18), die eine Hilfsdruckleitung (20) aufweist und die mit dem Bremsdruckgeber (5) hydraulisch verbunden ist, sowie mit in der Hauptdruckleitung (2) und in der Rücklaufleitung (16) eingesetzten Einlaß- und Auslaßventil (1,17), die den Druckmitteldurchlaß in der Hauptdruckleitung (2) und in der Rücklaufleitung (16) entweder sperren oder geöffnet halten, wobei zwischen dem Einlaßventil (1) und der Radbremse (3) in die Hauptdruckleitung (2) eine Blende abhängig von einer definierten hydraulischen Druckdifferenz zwischen der Radbremse (3) und dem Bremsdruckgeber (5) in die Blendenposition schaltbar ist, und wobei in einer ersten Schaltstellung ein ungehinderter hydraulischer Durchlaß der Hauptdruckleitung (2) zur Radbremse (3) hergestellt ist und in einer weiteren Schaltstellung die Blende (4) den Druckmitteldurchlaß zur Radbremse (3) begrenzt, dadurch **gekennzeichnet**, daß das Einlaßventil (1) die schaltbare. Blende (4) aufweist, die an einem Kolben (8,14) in einem Ventilträger (10) des Einlaßventils (1) angeordnet ist.

2. Hydraulische Bremsanlage nach Anspruch 1, dadurch **gekennzeichnet**, daß die schaltbare Blende (4) mittels einer Druckfeder (7) grundpositioniert in der Bremslösestellung eine drosselfreie Schaltstellung einnimmt.

3. Hydraulische Bremsanlage nach Anspruch 1 oder 2, dadurch **gekennzeichnet**, daß die schaltbare Blende (4) durch zwei einander entgegengesetzt wirkende Steuerdruckanschlüsse (6,6') betätigbar ist, wobei der erste Steuerdruckanschluß (6) an der Hauptdruckleitung (2), im Bereich zwischen dem Einlaßventil (1) und dem Bremsdruckgeber (5) angeschlossen ist, und daß der zweite Steuerdruckanschluß (6') dem Radbremsdruck ausgesetzt ist.

4. Hydraulische Bremsanlage nach einem der vorhergehenden Ansprüche, dadurch **gekennzeichnet**, daß die schaltbare Blende (4) Bestandteil eines Ringkolbens (8) ist, der auf einem verjüngten Fortsatz eines in einem Ventilaufnahmekörper (9) eingesetzten Ventilträgers (10) geführt ist, der das elektromagnetisch betätigbare Ventilschließglied (11) aufnimmt.

5. Hydraulische Bremsanlage nach Anspruch 4, dadurch **gekennzeichnet**, daß die Druckfeder (7) zwischen der Stirnfläche des Ringkolbens (8) und einer benachbarten Stirnfläche des Ventilträgers (10) eingespannt ist.

6. Hydraulische Bremsanlage nach Anspruch 4, dadurch **gekennzeichnet**, daß sich der zylinderförmig ausgebildete Fortsatz des Ventilträgers (10) in eine Stufenbohrung des Ventilaufnahmekörpers (9) erstreckt, an der der Ringkolben (8) radial geführt ist sowie dort axial zur Anlage gelangt.

7. Hydraulische Bremsanlage nach Anspruch 6, dadurch **gekennzeichnet**, daß zwischen dem Fortsatz und der Stufenbohrung eine Ringdichtung (12) angeordnet ist, die an der der Druckfeder (7) abgewandten weiteren Stirnfläche des Ringkolbens (8) anliegt.

8. Hydraulische Bremsanlage nach Anspruch 4, dadurch **gekennzeichnet**, daß die Blende (4) im Bereich der die Druckfeder (7) kontaktierenden Stirnfläche des Ringkolbens (8) angeordnet ist.

9. Hydraulische Bremsanlage nach Anspruch 4, dadurch **gekennzeichnet**, daß die der Druckfeder (7) zugewandte Stirnfläche am Ringkolben (8) mit wenigstens einem den Ventilträger (10) radial durchdringenden Druckmittelkanal (13) hubabhängig einen variablen Durchlaßquerschnitt bildet.

10. Hydraulische Bremsanlage nach Anspruch 1, dadurch **gekennzeichnet**, daß der die Blendenfunktion ausführende Kolben als Stufenkolben (14) parallel zu einem elektromagnetisch betätigbaren Ventilschließglied (11) in eine zur Hauptdruckleitung (2) quer verlaufenden Aufnahmebohrung (15) im Ventilträger (10) angeordnet ist.

## Claims

1. A hydraulic brake system with slip control, comprising: a braking pressure generator which is hydraulically connected to at least one wheel brake (3) by way of a main pressure line (2), a return line (16) connected to the wheel brake (3) and to a pressure-fluid collecting means (19), an auxiliary-pressure pump (18) having an auxiliary-pressure line (20) and being hydraulically connected to the braking pressure generator (5), and an inlet and outlet valve (1, 17) inserted into the main pressure line (2) and the return line (16) and either closing or keeping open the pressure fluid passage in the main pressure line (2) and in the return line (16), and a restrictor is controllable in the main pressure line (2) between the inlet valve (1) and the wheel brake (3) to adopt the restrictor position as a function of a defined hydraulic pressure difference between the wheel brake (3) and the braking pressure generator (5), permitting an unhindered hydraulic fluid flow in the main pressure line (2) to the wheel brake (3) in a first operating position, while the restrictor (4) limits the pressure fluid flow to the wheel brake (3) in another operating position,
**characterized** in that the inlet valve (1) includes the controllable restrictor (4) which is arranged on a piston (8, 14) in a valve carrier (10) of the inlet valve (1).

2. A hydraulic brake system as claimed in claim 1,
**characterized** in that a compression spring (7) defines the basic position of the controllable restrictor (4) which adopts an unrestricted operating position when the brake is released.

3. A hydraulic brake system as claimed in claim 1 or claim 2,
**characterized** in that the controllable restrictor (4) can be operated by two opposedly acting control pressure ports (6, 6'), the first control pressure port (6) being connected to the main pressure line (2) in the area between the inlet valve (1) and the braking pressure generator (5), and in that the second control pressure port (6') is exposed to the wheel braking pressure.

4. A hydraulic brake system as claimed in any one of the preceding claims,
**characterized** in that the controllable restrictor (4) is a component part of an annular piston (8) which is guided on a tapered extension of a valve carrier (10) that is inserted into a valve-accommodating member (9) and accommodates the electromagnetically operable valve closure member (11).

5. A hydraulic brake system as claimed in claim 4,
**characterized** in that the compression spring (7) is compressed between the end surface of the annular piston (8) and an adjacent end surface of the valve carrier (10).

6. A hydraulic brake system as claimed in claim 4,
**characterized** in that the cylindrical extension of the valve carrier (10) extends in a stepped bore of the valve-accommodating member (9), where the annular piston (8) is radially guided and axially abutting.

7. A hydraulic brake system as claimed in claim 6,
**characterized** in that an annular seal (12) is arranged between the extension and the stepped bore and abuts on the other end surface of the annular piston (8) remote from the compression spring (7).

8. A hydraulic brake system as claimed in claim 4,
**characterized** in that the restrictor (4) is arranged in the area of the end surface of the annular piston (8) which contacts the compression spring (7).

9. A hydraulic brake system as claimed in claim 4,
**characterized** in that the end surface of the annular piston (8) close to the compression spring (7) forms stroke-responsively a variable flow cross-section with at least one pressure fluid duct (13) which extends radially through the valve carrier (10).

10. A hydraulic brake system as claimed in claim 1,
**characterized** in that the piston performing the restrictor function is arranged as control piston (14) in parallel to an electromagnetically operable valve closure member (11), in an accommodating bore (15) in the valve carrier (10) extending transversely with respect to the main pressure line (2).

## Revendications

1. Système de freinage hydraulique à régulation du glissement, comprenant un générateur de pression de freinage, qui est en communication hydraulique avec au moins un frein de roue (3) par l'intermédiaire d'une tuyauterie de pression principale (2), une conduite de retour (16), qui est raccordée au frein de roue (3) et communique avec un accumulateur d'agent de pression (19), une pompe de pression auxiliaire (18), qui comporte une conduite de pression auxiliaire (20) et est en communication hydraulique avec le générateur de pression de freinage (5), et une valve d'entrée et une valve de sortie (1, 17) qui sont montées dans la conduite de pression principale (2) et dans la conduite de retour (16) et qui maintiennent soit bloqué, soit ouvert le passage d'agent de pression dans la conduite de pression principale (2) et dans la conduite de retour (16), tandis que, dans la conduite de pression principale (2) et entre la valve d'entrée (1) et le frein de roue (3), un étranglement est commutable dans la position d'étranglement en fonction d'une différence de pression hydraulique définie entre le frein de roue (3) et le générateur de pression de freinage (5) et que, dans une première position de commutation, un passage hydraulique sans obstacle est produit de la conduite de pression principale (2) au frein de roue (3) et, dans une seconde position de commutation, l'étranglement (4) limite le passage d'agent de pression vers le frein de roue (3), caractérisé en ce que la valve d'entrée (1) comporte l'étranglement commutable (4), lequel est disposé, sur un piston (8, 14), dans un porte-valve (10) de la valve d'entrée (1).

2. Système de freinage hydraulique selon la revendication 1, caractérisé en ce que l'étranglement commutable (4), dont la position de base est assurée au moyen d'un ressort de compression (7), prend, dans la position de relâchement du frein, une position de commutation sans restriction.

3. Système de freinage hydraulique selon la revendication 1 ou 2, caractérisé en ce que l'étranglement commutable (4) est agencé de façon à pouvoir être actionné au moyen de deux raccords de pression de commande (6, 6') agissant en sens opposé l'un de l'autre, le premier raccord de pression de commande (6) étant raccordé à la conduite de pression principale (2) dans la zone située entre la valve d'entrée (1) et le générateur de pression de freinage (5), et en ce que le second raccord de pression de commande (6') est soumis à l'action de la pression du frein de roue.

4. Système de freinage hydraulique selon l'une des revendications précédentes, caractérisé en ce que l'étranglement commutable (4) est une partie constitutive d'un piston annulaire (8) qui est guidé sur une partie de prolongement, plus étroite, d'un porte-valve (10) qui est monté dans un corps de logement de valve (9) et qui sert à loger l'obturateur de valve (11) à actionnement électromagnétique.

5. Système de freinage hydraulique selon la revendication 4, caractérisé en ce que le ressort de compression (7) est serré entre la surface frontale du piston annulaire (8) et une surface frontale, voisine, du porte-valve (10).

6. Système de freinage hydraulique selon la revendication 4, caractérisé en ce que la partie de prolongement du porte-valve (10), réalisée en forme de cylindre, s'étend dans un alésage étagé du corps de logement de valve (9) sur lequel le piston annulaire (8) est guidé radialement et sur lequel il vient aussi en appui axialement.

7. Système de freinage hydraulique selon la revendication 6, caractérisé en ce qu'une garniture annulaire d'étanchéité (12) est disposée entre la partie de prolongement et l'alésage étagé et prend appui sur la seconde surface frontale du piston annulaire (8) qui est située à l'opposé du ressort de compression (7).

8. Système de freinage hydraulique selon la revendication 4, caractérisé en ce que l'étranglement (4) est disposé dans la zone de la surface frontale du piston annulaire (8) qui est au contact du ressort de compression (7).

9. Système de freinage hydraulique selon la revendication 4, caractérisé en ce que la surface frontale du piston annulaire (8) située à l'opposé du ressort de compression (7) forme, en fonction de la course, une section variable de passage avec au moins un conduit d'agent de pression (13) traversant radialement le porte-valve (10).

10. Système de freinage hydraulique selon la revendication 1, caractérisé en ce que le piston remplissant la fonction d'étranglement, réalisé sous forme d'un piston étagé (14), est disposé, parallèlement à un obturateur de valve (11) à actionnement électromagnétique, dans un alésage de logement (15) du porte valve (10) qui s'étend transversalement à la conduite de pression principale (2).
